# EUROPEAN PATENT APPLICATION

(11) **EP 2 048 608 A1**
(43) Date of publication of application: **15.04.2009**
(21) Application number: 07118374.3
(22) Date of filing: 12.10.2007
(51) Int. Cl.: G06Q 10/00

(54) **Method and system for transmitting website visitation data**

(71) Applicant: Nedstat B.V., 1112 XC Diemen (NL)
(72) Inventor: Berger, Michiel, Alkmaar 1817 EB (NL)
(74) Representative: van Looijengoed, Ferry Antoin Theodorus

(57) **Abstract**

The invention relates to a computer-implemented method of providing website visitation data of a website is proposed as well as a computer program. The method is performed in a system comprising a database with website visitation data of a plurality of visitors of said website and a user terminal. The method comprises the steps of assigning at least a part of said plurality of visitors of said website to at least one visitor segment in accordance with one or more segmentation criteria and querying said at least one visitor segment for obtaining said website visitation data for said at least one visitor segment. Furthermore, the method comprises the steps of comparing said obtained website visitation data for said at least one visitor segment with corresponding website visitation data of a reference group and selecting website visitation data of said at least one visitor segment deviating from said website visitation data of said reference group to provide a subset of website visitation data. The subset of website visitation data is then provided to the user terminal.

## Description

### FIELD OF THE INVENTION

The present invention relates to the field of web analytics. Web analytics refers to the analysis of various online channels used by customers, including websites, e-mail and online video. More specifically, the invention relates to the field of reporting results of this analysis to a user terminal.

### BACKGROUND OF THE INVENTION

The increase in electronic commerce over the Internet has resulted in a growing demand for websites to track customer's behaviour and activities on these websites. Tracking this activity enables the owners of the website to better understand their customers. The information gathered may e.g. relate to what customers look at, how long they stay, what they buy, how they came on to the website, how they move around on the website or how they interact with the website etc. By studying this information, owners of websites have been able to improve their website by making modifications to the functionality, navigation and design of the website.

The number of visitors of websites may be very large. Moreover, there is a demand to obtain more accurate information on the behaviour of these visitors. It is known, e.g. from WO 2006/133219, to define segments for filtering website visitation data. Such segments are groups of visitors whose behaviour complies with certain predefined rules or characteristics. As an example, a segment may contain those visitors of a website that have been on that website for more than two minutes or those visitors that have bought more than three products. The owner of the website is provided with reports for the desired segments.

Typically, these reports are transmitted from a server running the web analytics application to a user terminal over a transmission network. The size of these reports may be considerable and, therefore, certain requirements for the network capacity apply. Moreover, despite the segmentation definitions, the prior art method of providing website visitation data still places a considerable burden on the website owner to derive relevant information on website usage of the website visitors from the large amount of website visitation data.

In view of the above, there is a demand for an improved method for providing website visitation data.

### SUMMARY OF THE INVENTION

A computer-implemented method of providing website visitation data of a website is proposed as well as a computer program. The method is performed in a system comprising a database with website visitation data of a plurality of visitors of said website and a user terminal. The method comprises the steps of assigning at least a part of said plurality of visitors of said website to at least one visitor segment in accordance with one or more segmentation criteria and querying said at least one visitor segment for obtaining said website visitation data for said at least one visitor segment. Furthermore, the method comprises the steps of comparing said obtained website visitation data for said at least one visitor segment with corresponding website visitation data of a reference group and selecting website visitation data of said at least one visitor segment deviating from said website visitation data of said reference group to provide a subset of website visitation data. The subset of website visitation data is then provided to the user terminal.

Also, a system for providing website visitation data of a website to a user terminal is proposed. The system comprises a database with website visitation data of a plurality of visitors of said website. At least a part of the visitors of the website has been or is assigned to at least one visitor segment in accordance with one or more segmentation criteria and a query element arranged for querying said at least one visitor segment for obtaining said website visitation data for said at least one visitor segment. A query element is arranged for querying said at least one visitor segment for obtaining said website visitation data for said at least one visitor segment. Moreover, the system comprises a comparator arranged for comparing said obtained website visitation data for said at least one visitor segment with corresponding website visitation data of a reference group and a selector arranged for selecting website visitation data of said at least one visitor segment deviating in a predetermined manner from said website visitation data of said reference group to provide a subset of website visitation data. The system comprises a transmitter for providing said subset of website visitation data to the user terminal.

The method and system are based on the insight that only significant deviations of website visitation data for a particular segment from average or regular visitor behaviour are relevant for a website owner. The average or regular visitor behaviour is defined for a reference group. It may be determined what deviation amounts to a significant deviation and only those website visitation data that are determined to deviate significantly from average or regular visitor behaviour are reported to the owner of the website. As a consequence, the owner is provided with less, but relevant, website visitation data, and processor load and/or network load is reduced when these data are transmitted.

It should be appreciated that the term 'website' includes other online channels, such as e-mail, rss, or access via mobile devices.

It should further be appreciated that the providing of the subset of website visitation data includes the transmission of the website visitation data and the retrieval of the website visitation data in the form of reports to the user terminal and/or the online inspection of the reports from the user terminal.

It should also be appreciated that website visitation data may relate to characteristics of the website visit as well as to other available visitor information, such as the age or gender of the visitor. The latter information may e.g. be obtained from visitors that have registered themselves with a website, visitors that participated in enquiries, visitors that are members of a panel etc.

In an embodiment, the system further comprises a plurality of client computers arranged for accessing the website via a network and to provide the website visitation data resulting from accessing the website and the method comprises the step of retrieving the website visitation data from the client computers over a network to the database. As a consequence, the database may efficiently gather the website visitation data.

The method may further comprise the step of receiving the segmentation criteria from said user terminal. This enables owners of websites or third parties to easily and efficiently define and adapt segmentation criteria according to their information needs.

The reference group may e.g. consist of all visitors of said website or of all visitors of the website except those visitors assigned to the at least one visitor segment. By comparing the website visitation data of the visitor segment with the website visitation data of all visitors of the website or the rest of the visitors of the website (i.e. the visitors not assigned to the visitor segment), the relevancy of the transmitted data is improved and the amount of the website visitation data provided to the user terminal is reduced.

However, it is also possible that reference group consists of visitors of said website assigned to at least one further visitor segment. This further visitor segment does not necessarily correspond to the rest of the visitors of the website as described in the previous paragraph. This embodiment improves the information retrieval capacity of the method and system.

The reference group may be defined and/or amended by the website owner or third party, but may as well be selected automatically by the system.

The website visitation data of the visitor segment and the reference group may contain numerical data and the subset of website visitation data may be provided by selecting website visitation data deviating with a predetermined value from website visitation data of a reference group. This deviation may also be defined in relation to a threshold to avoid that any deviation from the reference group is reported. By using numerical measures, statistical methods can be applied and thresholds be set to determine the subset of website visitation data.

It is noted that predetermined website visitation data may be excluded from the subset of website visitation data. As an example, some trivial relations between website visitation data or between a visitor segment and website visitation data can be excluded from transmission to the user terminal. For example, it is highly likely that website visitors spending more than two minutes on a website have also navigated through more pages than website visitors who have spent less than two minutes on the website. By excluding such website visitation data, network load is further reduced and the relevancy of the transmitted website visitation data is improved.

The invention will be further illustrated with reference to the attached drawings, which schematically show a preferred embodiment according to the invention. It will be understood that the invention is not in any way restricted to this specific and preferred embodiment.

### BRIEF DESCRIPTION OF THE DRAWINGS

In the drawings:
FIGS. 1A and 1B show schematic systems for applying a method according to an embodiment of the invention;
FIG. 2 shows a schematic web analytics system according to an embodiment of the invention;
FIG. 3 shows a flow chart illustrating steps of a method according to an embodiment of the invention;
FIG. 4 shows an example of a user interface for providing segmentation criteria from a user terminal;
FIG. 5 shows a schematic example of a user interface of a user terminal presenting the subset of website visitation data.

### DETAILED DESCRIPTION OF THE DRAWINGS

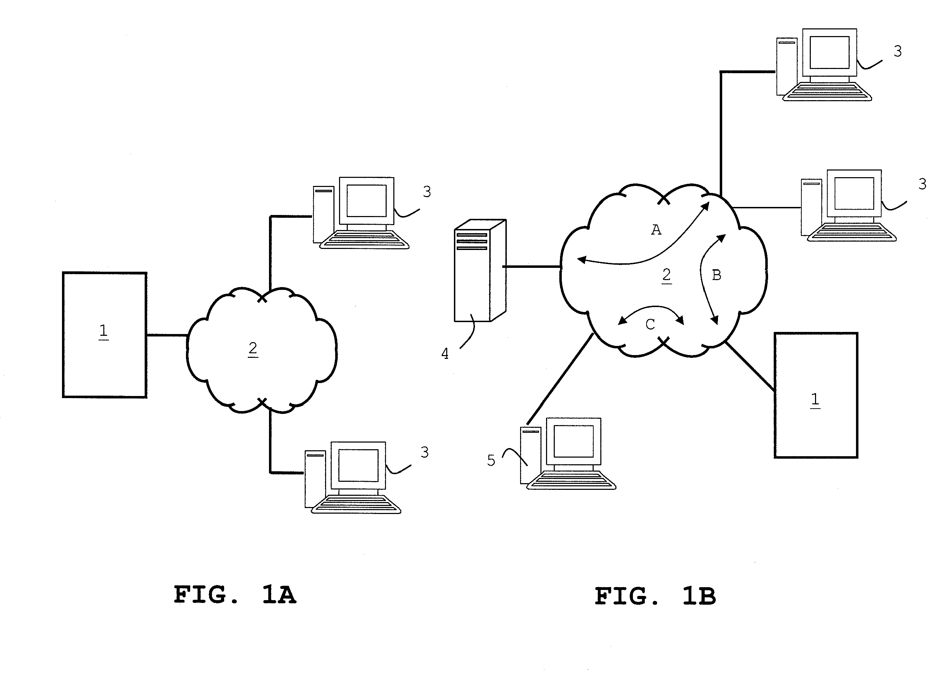

FIGS. 1A and 1B show schematic systems for applying a method according to an embodiment of the invention.

In general, owners of websites or other parties desire to have detailed information of the visitors of the website. These website visitation data include, but are not limited to, the country of origin of the visitors, the operating system used by the visitor, the search engine used by the visitor, the buying behaviour of the visitor, the type of products bought, how visitors navigate in the website etc.

In FIG. 1A, a system 1 hosts a website that can be accessed over a network 2, such as internet, by a plurality of client computers 3. The system 1 is also arranged for providing and displaying the website visitation data performing the method according to an embodiment of the invention.

In FIG. 1B, the website is hosted by a server 4 accessible over a network 2 by a plurality of client computers 3 as indicated by the arrow A. A method according to the embodiment of the invention is performed by the system 1. The system 1 receives website visitation data. The website visitation data is communicated from the client computers 3 to the system 1 in a manner known as such and indicated by the arrow B. Website visitation data are provided from the system 1 to another computer, such as user terminal 5, as indicated by the arrow C.

It should be appreciated that various alternatives can be envisioned for the arrangements of FIGS. 1A and 1B, such as communication over different networks and wireless networks for mobile communication. For example, one or more client computers 3 may be handheld computers capable of wireless communication with the server 4. As another example, the website visitation data can be provided from the system 1 to a party over a network other than the network 2.

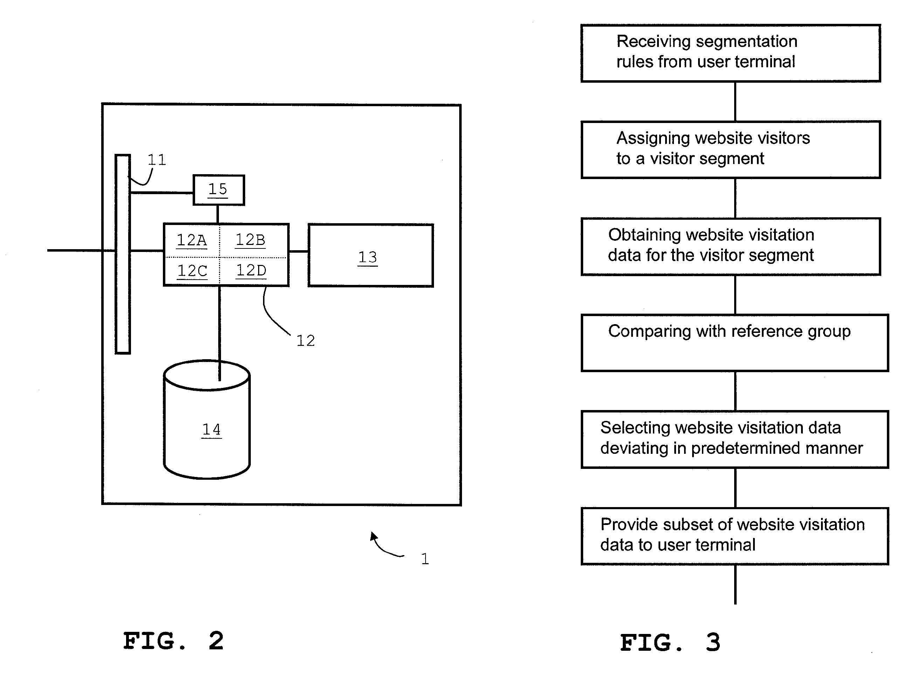

FIGS. 2 and 3 illustrate a system and method performed within the arrangement of FIG. 1B.

The system 1 comprises a network adapter 11, a processor 12, a storage 13 and a database 14. The below method is performed by the processor 12 applying a software program and using storage 13 and database 14. Therefore, the software program comprises an assigner 12A arranged for assigning visitors of the website to at least one visitor segment in accordance with one or more segmentation criteria and a query element 12B for querying the visitor segment for obtaining the website visitation data for the visitor segment. Moreover, a comparator 12C is provided that is arranged for comparing the obtained website visitation data for the visitor segment with corresponding website visitation data of a reference group. A selector 12D is provided that is arranged for selecting website visitation data of the visitor segment deviating from the website visitation data of the reference group to provide a subset of website visitation data. The system 1 involves a transmitter 15 for providing the subset of website visitation data to the user terminal.

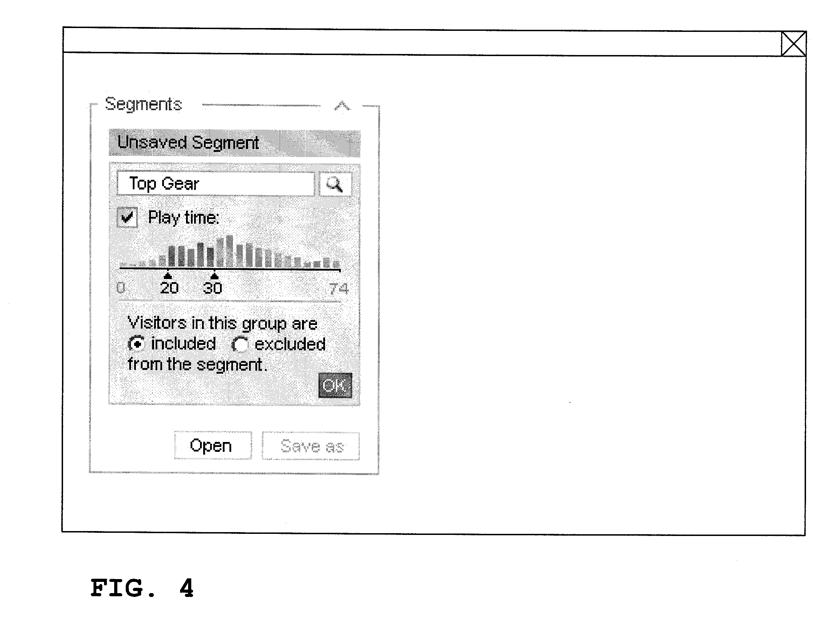

In operation, in a first step, the owner of a website defines segmentation rules and provides these segmentation rules to the system 1. A user interface for defining these segmentation rules is provided in FIG. 4. Examples of selection rules relate to the content viewed by the visitors, characteristics of the website visit (e.g. duration, number of page views, number of visits, new or returning visitor); the moment of the visit (hour, day), navigation characteristics (e.g. progress in an online process between pages, clickpath); campaign information (source of campaign etc.); e-commerce rules (orders, products, turnover, return on investment); search engine characteristics of the visitor (name of search engine, search terms used, search words used); referrers (URL, site name) and geography (continent, country, city).

Segmentation rules may be combined. A simple example of a segmentation rule is to find all visitors of the website that were on that website for more than two minutes. In the example of FIG. 4, a segment is defined as visitors that have viewed the program "Top Gear" for a time duration between 20 and 30 minutes.

The segmentation rule is received at the system 1 through the network adapter 11 and processed by the processor 12.

In a second step, the visitors from computer clients 3 of the website are analyzed in accordance with the received segmentation rule. Visitors complying with the rule are assigned to a visitor segment. As an example, all visitors of the website that stayed for two or more minutes are assigned to a visitor segment VS. If we assume that in the relevant period 100 visitors visited the website, 25 visitors may e.g. be assigned to the segment VS.

In a next step, a defined query is applied to the visitor segment VS to obtain particular website visitation data for that segment. As an example, the visitor segment may be queried to find out how many visitors of the segment VS ordered at least one product from the website. The result of the query may be that 10 visitors ordered at least one product. The reports, resulting from the queries, are not provided to the user terminal 5. Reporting such information provides information with little value to the user.

For that reason, in an embodiment of the invention, a comparison is made with a reference group. Only by comparison with a reference group, the query result for the visitor segment becomes informative, e.g. because a deviation can be observed. The reference group may be user defined. As an example, the reference group may be defined here as the other visitors of the website that were not assigned to the visitor segment VS. The reference group then consists of the 75 visitors staying on the website for less than two minutes. The corresponding website visitation data for this reference group may reveal that from these visitors only two ordered the particular product.

It should be noted that the reference group may be defined in another manner. As an example, the reference group may simply be all visitors of the website, including the visitors of the visitor segment VS. A particularly interesting example is to define a further visitor segment VS' for the reference group. Such a reference group may e.g. be defined as the visitors staying at the website for less than one minute.

In a next step, the website visitation data for the visitor segment VS to be provided to the user terminal 5 is selected, i.e. the subset of website visitation data. This selection is performed on the basis of the degree of deviation from corresponding website visitation data for the reference group.

In an embodiment, any deviation from the website visitation data of the reference group may be in the subset of website visitation data to be provided to the user terminal 5. For the above-mentioned example, the website visitation data relating to the ordering of at least one product by 10 visitors of visitor segment VS would be communicated to the user terminal, since for the reference group only 2 visitors ordered a product.

The deviation in this situation is a likely result, since a longer stay on a website is likely to raise the attraction for buying a product. Therefore, more advanced deviation criteria can be imagined that prevents providing obvious website visitation data results to the user terminal 5.

In such a more advanced embodiment, a particular preset value may be defined to reflect the significance of the deviation. As an example, it may be estimated that website visitors staying longer than two minutes on a website will order three times as often a product than visitors staying shorter. The user of the user terminal 5 may therefore define a preset value of 3 for the ratio of the number of visitors in the visitor segment VS as compared to number of visitors for the reference group ordering at least one product. Only if this ratio is larger than 3, the website visitation data will be part of the subset of website visitation data provided to the user terminal 5. Since the ratio in the present example would be 5 (ten visitors of segment VS bought a product and two visitors of the reference group), the website visitation data would indeed by included in the subset and provided to the user terminal, as illustrated in the last step of FIG. 3. These website visitation data represent a significant deviation from the reference group. From this data, the website owner can conclude that the length of stay is an important indicator for purchase likelihood and start to focus on finding the key drivers that extend the length of a website visit.

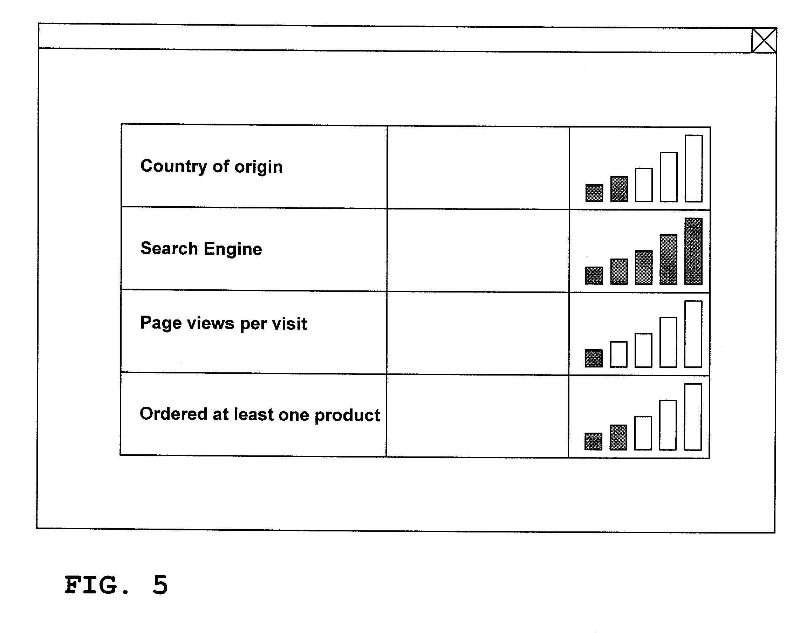

FIG. 5 shows a schematic example of the user interface of the user terminal 5 provided with the subset of website visitation data deviating in a predetermined manner or value from corresponding website visitation data for the reference group. In the first column, the deviating website visitation data are depicted. These deviations may relate to different reference groups. In the last column, a graphical representation is provided indicating the amount of deviation.

It should be appreciated that the scanning and analysis of the segments can be an automatic and continuous process.

It should also be appreciated that the subset of the website visitation data can be used as input for further processing. For example, conclusions drawn from the website visitation data can be grouped. If it turns out that visitors visiting a website for the first time order more products, spent less money, stay longer on the website and have been attracted to the website via campaign X, a single conclusion may be output as: campaign X has attracted impulse buyers.

It should further be noted that the obtained subset of website visitation data may also relate to certain visitor characteristics, such as (average) age or gender of the visitor. As an example, a result of the above described method may be that for a particular visitor segment VS, 75% of the buyers was a male, whereas only 45% of the buyers is male for all visitors of the website.

Finally, the processor 12 may be programmed to exclude predetermined website visitation data from the subset to avoid reporting trivial relations. This may e.g. be done by assigning weights to certain visitation data or relations, by excluding certain relations or by assigning high values to the preset values.

## Claims

1. A computer-implemented method of providing website visitation data of a website in a system comprising:
- a database with website visitation data of a plurality of visitors of said website; and
- a user terminal the method comprising the steps of:
- assigning at least a part of said plurality of visitors of said website to at least one visitor segment in accordance with one or more segmentation criteria;
- querying said at least one visitor segment for obtaining said website visitation data for said at least one visitor segment;
- comparing said obtained website visitation data for said at least one visitor segment with corresponding website visitation data of a reference group;
- selecting website visitation data of said at least one visitor segment deviating from said website visitation data of said reference group to provide a subset of website visitation data;
- providing said subset of website visitation data to said user terminal.

2. The method according to claim 1, wherein said system further comprises a plurality of client computers arranged for accessing said website via a network and to provide said website visitation data resulting from accessing said website, the method further comprising the step of retrieving said website visitation data from said client computers over a network to said database.

3. The method according to one or more of the preceding claims, further comprising the step of receiving said segmentation criteria for said visitor segment from said user terminal.

4. The method according to one or more of the preceding claims, wherein said reference group consists of all visitors of said website not assigned to said at least one visitor segment.

5. The method according to one or more of the claims 1-3, wherein said reference group consists of visitors of said website assigned to at least one further visitor segment.

6. The method according to one or more of the preceding claims, wherein said website visitation data of said at least one visitor segment and said reference group contain numerical data and said subset of website visitation data is provided by selecting website visitation data deviating with a predetermined value from said corresponding website visitation data for said reference group or a preset value.

7. The method according to one or more of the preceding claims, wherein said steps of comparing, selecting and providing are performed substantially continuously.

8. The method according to one or more of the preceding claims, further comprising the step of excluding predetermined website visitation data from said subset of website visitation data.

9. A system for providing website visitation data of a website to a user terminal comprising:
- a database with website visitation data of a plurality of visitors of said website:
- optionally, an assigner arranged for assigning at least a part of said plurality of visitors of said website to at least one visitor segment in accordance with one or more segmentation criteria;
- a query element arranged for querying said at least one visitor segment for obtaining said website visitation data for said at least one visitor segment;
- a comparator arranged for comparing said obtained website visitation data for said at least one visitor segment with corresponding website visitation data of a reference group;
- a selector arranged for selecting website visitation data of said at least one visitor segment deviating from said website visitation data of said reference group to provide a subset of website visitation data;
- a transmitter for providing said subset of website visitation data to the user terminal.

10. The system according to claim 9, further comprising means for performing the method of claims 2-8.

11. A computer program for providing website visitation data of a website in a system comprising:
- a database with website visitation data of a plurality of visitors of said website; and
- a user terminal
at least including computer executable code portions for:
- assigning at least a part of said plurality of visitors of said website to at least one visitor segment in accordance with one or more segmentation criteria;
- querying said at least one visitor segment for obtaining said website visitation data for said at least one visitor segment;
- comparing said obtained website visitation data for said at least one visitor segment with corresponding website visitation data of a reference group;
- selecting website visitation data of said at least one visitor segment deviating from said website visitation data of said reference group to provide a subset of website visitation data;
- providing said subset of website visitation data to said user terminal.
